**Europäisches Patentamt**

**European Patent Office**

**Office européen des brevets**

(19)

(11) Numéro de publication: **0 006 534**
**B1**

(12)

# FASCICULE DE BREVET EUROPEEN

(45) Date de publication du fascicule du brevet: **08.09.82**

(21) Numéro de dépôt: **79101921.9**

(22) Date de dépôt: **13.06.79**

(51) Int. Cl.³: **C 23 C  11/08,
B 32 B  15/00, B 23 B  27/14**

(54) **Pièce d'usure en métal dur.**

(30) Priorité: **22.06.78 CH  6787/78**

(43) Date de publication de la demande:
**09.01.80 Bulletin 80/1**

(45) Mention de la délivrance du brevet:
**08.09.82 Bulletin 82/36**

(84) Etats contractants désignés:
**DE GB**

(56) Documents cités:
**DE - B - 1 954 366**
**FR - A - 2 170 258**
**FR - A - 2 279 853**
**FR - A - 2 370 551**
**GB - A 851 208**

(73) Titulaire: **STELLRAM S.A.**
**Route de l'Etraz**
**CH-1260 Nyon, Vaud (CH)**

(72) Inventeur: **Gonseth, Denis R.**
**Ferme du Greny**
**CH-1297 Founex/Vaud (CH)**
Inventeur: **Hauser, Charles**
**"Les Nuyerattes"**
**CH-1261 Genolier/Vaud (CH)**

(74) Mandataire: **Micheli, Michel Pierre et al,**
**MICHELI & CIE 118, Rue du Rhône Case Postale**
**47**
**CH-1211 Geneve 6 (CH)**

Courier Press, Leamington Spa, England.

EP 0 006 534 B1

# 0 006 534

## Pièce d'usure en métal dur

La présente invention se rapporte à une pièce d'usure en métal dur, notamment pour outils de coupe, recouverte au moins aux endroits soumis à usure d'un revêtement de protection stratifié.

Par pièce en "métal dur", on entend généralement des pièces constituées par un mélange de carbure métalliques de dureté élevée, par exemple WC, TiC, TaC, NbC, etc., comportant ou non un métal servant de liant, par exemple Fe, Co, Ni, etc. Ces pièces peuvent, par exemple, être des plaquettes ou outils de coupe pour l'usinage de matériaux métalliques, par exemple des aciers ou de matériaux non métalliques.

Il est déjà connu, notamment des brevets CH 592.161, US 3.964,937 et DE-AS 1.959.690, que l'on peut améliorer la résistance à l'usure de pièces en métal dur, en recouvrant leur surface par une couche simple, double ou triple comprenant par exemple un carbure, un nitrure et/ou un carbonitrure d'éléments des groupes IV à VI du Tableau Périodique. On sait également que la résistance à l'oxydation du revêtement peut être augmentée par la présence d'une couche contenant de l'oxygène, par exemple une couche d'oxynitrure comme décrit dans le brevet US 4.018.631, ou en recouvrant ce revêtement avec une couche externe d'un oxyde réfractaire comme préconisé dans les brevets CH 540.990 et 540.991.

Les revêtements actuellement utilisés, par exemple sur les plaquettes de coupe commercialisées, ne comportent pas plus de trois couches superposées, et il est ainsi difficile d'obtenir les meilleures conditions de résistance de la plaquette recouverte à la fois à l'usure et à l'oxydation, tout en conférant à la pièce usinée un état de surface satisfaisant.

Il a également déjà été proposé dans le brevet FR 2.170.258 un revêtement comportant cinq couches superposées. Toutefois, comme il ressort de l'exemple 4 du brevet précité, deux des cinq couches de ce revêtement sont en réalité des zones de transition ne présentant pas une composition déterminée, mais qui sont destinées à assurer le passage continu, progressif, d'une première couche de TiC à une ouche intermédiaire de TiN, et de celle-ci à une seconde couche de TiC. Ces couches ou zones de transition ont donc une teneur croissante en l'un des deux éléments et décroissante en l'autre élément. Un tel passage professif d'une couche à une autre présente l'inconvénient de favoriser la propagation des fissures et ainsi de diminuer la résistance aux chocs du revêtement.

Le but de cette invention consiste par conséquent à fournir un revêtement stratifié qui améliore les propriétés de résistance tant à l'usure qu'à l'oxydation de pièces en métal dur, par exemple de plaquettes de coupe, et qui soit plus résistant aux chocs, par rapport aux revêtements connus, tout en conférant en plus un meilleur état de surface aux pièces usinées au moyen des plaquettes recouvertes par un tel revêtement stratifié.

L'objet de cette invention, visant à atteindre le but ci-dessus, consiste par conséquent en une pièce d'usure en métal dur notamment pour outils de coupe, recouverte au moins aux endroits soumis à usure d'un revêtement de protection stratifié dont la couche en contact avec la pièce est une couche de carbure et dont des couches de même composition se répètent, caractérisée par le fait que ce revêtement comporte plus de cinq couches superposées, chacune ayant une composition déterminée constante dans son épaissur, que la couche externe est une couche de borure et que les couches intermédiaires sont choisies parmi des couches de carbure, de nitrure, d'oxyde, de borure et de composés mixtes de ceux-ci.

Les termes ci-dessus "composition déterminée constante dans son épaisseur" doivent être interprétés comme qualifiant chaque couche du revêtement à l'exception des portions comparativement négligeables de celles-ci situées à proximité des interfaces, ceci à cause des phénomènes de diffusion intervenant à ces interfaces.

L'usure d'un outil de coupe dépend essentiellement des trois facteurs suivants: résistance à l'oxydation, coefficient de frottement et uniformité de la surface. Grâce à la présente invention, ces trois facteurs sont optimalisés, le carbure déposé directement sur le substrat permettant d'obtenir un revêtement uniforme, les nitrure, borure et/ou oxyde améliorant le coefficient de frottement et la résistance à l'oxydation de la pièce d'usure ainsi revêtue. Il est également connu que le carbure améliore la résistance à l'usure en dépouille, alors que le nitrure améliore la résistance à l'usure en cratère. De plus, l'oxyde offre une résistance importante à l'oxydation.

Mais ce que l'invention apporte, et qui n'était pas prévisible pour l'homme de métier, c'est que la présence dans le revêtement protecteur d'un nombre de couches, et par là d'interfaces, beaucoup plus important que dans les revêtements connus, à épaisseur totale comparable, tend à améliorer nettement les propriétés de ce revêtement.

En effet, en multipliant le nombre de couches, le copeau arrive très vite sur celle qui optimalise son écoulement. Ainsi, tant en cratère qu'en dépouille, la couche "optimale" est atteinte après une usure très faible, tandis qu'avec un revêtement conventionnel, faisant intervenir deux ou trois couches seulement, au moins 30 à 50% de la couche doivent être usés avant que l'on atteigne l'optimalisation.

En outre, l'usure dépend également de la température atteinte par l'outil en cours de travail. De ce fait, il est nécessaire que l'énergie déployée au niveau de la surface de la plaquette soit minimale. Le copeau, par la présence d'un revêtement stratifié à composants multiples, répétitifs, va former un

**0 006 534**

chemin d'usure au travers de cette couche, chemin qui favorisera cette énergie minimale, puisque le copeau rencontrera de toute manière une couche qui optimalisera les divers paramètres.

Il a également été constaté que la présente d'un revêtement stratifié multiple diminue la propagation de fissures au travers du revêtement, grâce à la présence d'un nombre plus important d'interfaces, et améliore ainsi la résistance aux chocs de celui-ci et par là de la pièce d'usure.

D'autre part, la présence de borure à la surface du revêtement protecteur permet d'obtenir, de façon inattendue, un meilleur état de surface de la pièce usinée.

Lorsqu'une des couches intermédiaires est constituée par un nitrure, il est préférable, pour améliorer l'adhérence, de déposer entre les deux couches de pur carbure et de pur nitrure, une ou plusieurs couches de carbonitrures dont la composition est variable, allant du carbonitrure riche en carbone au nitrocarbure riche en azote, chaque couche ayant bien entendu une composition déterminée.

De même, si deux couches adjacentes sont un borure et un nitrure, il sera nécessaire de former entre elles une série de couches en boronitrure de compositions échelonnées entre >0 et <100% de chacun des deux éléments, chaque couche présentant également une composition déterminée.

L'épaisseur totale du revêtement de la pièce d'usure selon l'invention peut être comprise entre 0,5 et 20 $\mu$, mais de préférence entre 1 et 10 $\mu$.

Le nombre des couches formant le revêtement protecteur doit être de six au minimum, et de préférence de plus de dix. L'effet de continuité augmente avec l'importance de la stratification, sans supprimer l'effet de barrière de propagation des fissures, effet qui n'existe pas dans le cas d'un passage continu entre deux couches.

En outre, la répétition d'un certain nombre de couches ou d'un groupe de couches est bénéfique dans la plupart des cas sur les propriétés recherchées du revêtement.

Comme carbures et nitrures, on préfère utiliser ceux des éléments Hf, Zr, Ta ou Ti; pour les borures, on préfère ceux des éléments Hf, Ta, Ti, Zr et N; alors que pour les oxydes, les éléments préférés sont ceux de Al, Hf, Zr, Be et Ti.

Pour le dépôt du revêtement sur la surface de l'outil de coupe, toute technique, appropriée peut être utilisée permettant d'obtenir un revêtement adhérent, compact, cohérent et homogène.

Parmi ces techniques, on préfère employer le dépôt par réaction chimique en phase gazeuse (ou CVD="chemical vapor deposition"). Les conditions expérimentales à utiliser peuvent être facilement déterminées par l'homme du métier, les techniques de dépôt par réaction en phase gazeuse des carbures, nitrures, carbonitrures, borures et oxydes ayant été décrites abondamment et en détail dans la littérature.

Généralement, si le dépôt se fait par CVD, il est effectué à une température comprise entre 850 et 1200°C environ. Les produits de départ gazeux peuvent être par exemple un halogénure, de l'hydrogène et un hydrocarbure, un composé azoté ou un composé d'oxygène, pour les dépôts de carbure, de nitrure ou d'oxyde respectivement, alors que le dépôt de borure se fait par exemple à partir de deux halogénures et d'hydrogène. Si l'on veut obtenir une couche de composition intermédiaire ou mixte, il est nécessaire d'employer un mélange des composés correspondants. Le mélange gazeux peut également contenir un gaz inerte comme gaz porteur.

Selon les résultats recherchés, l'opération de revêtement peut être effectuée en une seule fois, ou en plusieurs étapes, chaque étape correspondant au dépôt d'une des couches du revêtement final. La technique de déposition par réaction en phase gazeuse présente en effet l'avantage de permettre la modification instantanée de la composition du mélange gazeux au cours du dépôt, et ainsi de la composition du revêtement obtenu.

L'invention sera maintenant illustrée en référence aux exemples suivants.

Exemple 1

Un revêtement constitué par trois couches de TiC, TiN et TiB$_2$ respectivement a été déposé en utilisant la méthode par réactions chimiques en phase gazeuse, sur un outil de coupe en métal dur. Les propriétés de résistance à l'usure de l'outil de coupe ainsi revêtu ont ensuite été testées. On a testé de même les propriétés d'un outil identique, dont le revêtement était constitué par un revêtement comportant les mêmes composés, mais totalisant onze couches, l'épaisseur totale de chacun des deux types de revêtement atteignant environ 8 $\mu$. Les résultats de ces tests sont les suivants, comparés avec ceux obtenus avec un outil non revêtu:

a) Tournage d'acier "CK 60" (Symbole DIN) ou 2C60 (Euronorm 83)
Conditions de travail:
| | |
|---|---|
| vitesse | 300 m/min |
| avance | 0,41 mm/tour |
| profondeur de coupe | 3,2 mm |
| substrat | P 25 (classification ISO des carbures) |
| outil | géométrie SPUN 12 03 08 (code ISO) |

3

| Revêtement | Temps de coupe secondes | Usure de l'outil (mm) en dépouille | sur nez |
|---|---|---|---|
| TiC-TiN-TiB$_2$ (3 couches) | 100 | 0,25 | 0,25 |
| TiC-4TiCN-TiN-4TiBN-TiB$_2$ (11 couches) | 100 | 0,18 | 0,18 |
| Outil non revêtu | 7 | outil détruit | |

N.B. Les couches successives de TiCN (ici 4), respectivement de TiBN, présentent des teneurs croissantes en N et décroissantes en C, respectivement croissantes en B et décroissantes en N.

b) Essai au disque d'acier "CK 60"

Conditions de travail:

| | |
|---|---|
| vitesse minimum | 230 m/min |
| vitesse maximum | 824 m/min |
| profondeur de coupe | 1,5 mm |
| avance | 0,30 mm/tour |
| substrat | P 25 |
| outil | géométrie TCMM 22 04 08 (code ISO) |
| $\phi$ minimum | 70 mm |
| $\phi$ maximum | 250 mm |

| Revêtement | $\phi$ sur disque pour lequel on a mesuré une usure sur le nez de l'outil de | | |
|---|---|---|---|
| | 0,1 mm | 0,2 mm | 0,5 mm |
| TiC-TiN-TiB$_2$ (3 couches) | 197 | 200 | 205 |
| TiC-4TiCN-TiN-4TiBN-TiB$_2$ (11 couches) | 200 | 206 | 215 |
| Outil non revêtu | 120 | 130 | 135 |

(voir N.B. ci-dessus).

Exemple 2

Comparaison par essai au disque d'acier "CK 60" des propriétés de résistance à l'usure de deux revêtements ayant chacun une épaisseur de 8 à 10 $\mu$:

Conditions de travail:

| | |
|---|---|
| avance | 0,30 mm/tour |
| profondeur de coupe | 1,5 mm |
| vitesse minimum | 230 m/min |
| vitesse maximum | 824 m/min |
| substrat | P 25 |
| outil | géométrie TCMM 22 04 08 (code ISO) |
| $\phi$ minimum | 70 mm |
| $\phi$ maximum | 250 mm |

| Revêtement | $\phi$ sur disque pour lequel on a mesuré une usure sur le nez de l'outil de | | |
|---|---|---|---|
| | 0,1 mm | 0,2 mm | 0,5 mm |
| TiC-Al$_2$O$_3$ (2 couches) | 21,5 | 228 | 230 |
| TiC-2TiCN-TiN-2TiCN-TiC-Al$_2$O$_3$-TiB$_2$ (9 couches) | 228 | 238 | 240 |

(voir N.B. Exemple 1)

Les résultats des exemples 1 et 2 ci-dessus indiquent clairement d'une part que les outils de coupe selon l'invention recouverts d'un revêtement à couches multiples et répétitives présentent des propriétés de résistance à l'usure beaucoup plus importantes que celles d'un outil de coupe non revêtu, et d'autre part que la stratification multiple du revêtement apporte une amélioration non prévisible quant à la tenue de coupe de l'outil par rapport à un revêtement d'épaisseur comparable comportant les mêmes composés mais ne présentant que deux ou trois couches superposées et non répétées.

4

Exemple 3

Des mesures de rugosité ont été effectuées sur la surface de pièces en acier "CK 60" ayant été usinées au moyen de plaquettes de coupe recouvertes d'un revêtement de protection dont la surface externe est constituée respectivement par une couche de TiN, de $Al_2O_3$ et de $TiB_2$.

Les conditions d'usinage étaient les suivantes: vitesse=200 m/min; avance=0,4 mm/tour; et profondeur de passe=3,2 mm; géométrie de l'outil: TNMM 22 04 12 (code ISO).

Les mesures de rugosité, effectuées dans la direction parallèle aux stries d'usinage, ont donné les résultats suivants:

|  | Ra |
| --- | --- |
| —revêtement avec surface en TiN: | $1,27\,\mu$ (50 $\mu$in) |
| —revêtement avec surface en $Al_2O_3$: | $1,14\,\mu$ (45 $\mu$in) |
| —revêtement avec surface en $TiB_2$: | $0,75\,\mu$ (30 $\mu$in) |

(Ra=moyenne arithmétique des ondulations)

Il ressort donc de cet exemple que la couche externe en $TiB_2$ permet d'obtenir un état de surface de la pièce usinée nettement meilleur, lui conférant notamment un aspect plus brillant.

## Revendications

1. Pièce d'usure en métal dur, notamment pour outils de coupe, recouverte au moins aux endroits soumis à usure d'un revêtement de protection stratifié dont la couche en contact avec la pièce est une couche de carbure et dont des couches de même composition se répètent, caractérisée par le fait que ce revêtement comporte plus de cinq couches superposées, chacune ayant une composition déterminée constante dans son épaisseur, que la couche externe est une couche de borure et que les couches intermédiaires sont choisies parmi des couches de carbure, de nitrure, d'oxyde, de borure et de composés mixtes de ceux-ci.

2. Pièce d'usure selon la revendication 1, caractérisée par le fait que le revêtement comporte au moins dix couches superposées.

3. Pièce d'usure selon la revendication 1 ou la revendication 2, caractérisée par le fait que le revêtement comporte plusieurs couches superposées de carbonitrures se différenciant par des teneurs différentes en C et N.

4. Pièce d'usure selon la revendication 1 ou la revendication 2, caractérisée par le fait que le revêtement comporte plusieurs couches superposées de boronitrures se différenciant par des teneurs différentes en B et N.

5. Pièce d'usure selon la revendication 1 ou la revendication 2, caractérisée par le fait que le revêtement comporte plusieurs fois le même groupe de couches de compositions différentes.

6. Pièce d'usure selon la revendication 1, caractérisée par le fait que l'épaisseur totale du revêtement est comprise entre 1 et 20 $\mu$.

7. Pièce d'usure selon la revendication 1, caractérisée par le fait que les couches de carbure et de nitrure sont choisies parmi les carbures et nitrures de Hf, Zr, Ti et Ta.

8. Pièce d'usure selon la revendication 1, caractérisée par le fait que les couches de borure sont choisies parmi les borures de Hf, Zr, Ti, N et Ta.

9. Pièce d'usure selon la revendication 1, caractérisée par le fait que les couches d'oxyde sont choisies parmi les oxydes de Hf, Zr, Ti, Al et Be.

## Patentansprüche

1. Verschleissteil aus Hartmetall, insbesondere für Schneidwerkzeuge, das wenigstens an den dem Verschleiss ausgesetzten Stellen mit einem geschichteten Schutzüberzug in dem die Schicht im Kontakt mit dem Stück eine Karbidschicht ist und in dem Schichten von der gleichen Zusammensetzung sich wiederholen, bedeckt ist, dadurch gekennzeichnet, dass dieser Überzug mehr als fünf übereinanderliegende Schichten aufweist, wovon jeder eine bestimmte in ihre Dicke gleichmässige Zusammensetzung hat, dass die äussere Schicht eine Boridschicht ist und dass die Zwischenschichten unter Karbid-, Nitrid-, Oxid-, Borid- und deren Mischverbindungsschichten gewählt sind.

2. Verschleissteil nach Anspruch 1, dadurch gekennzeichnet, dass der Überzug wenigstens zehn übereinanderliegende Schichten aufweist.

3. Verschleissteil nach Anspruch 1 oder Anspruch 2, dadurch gekennzeichnet, dass der Überzug mehrere übereinanderliegende Schichten von Karbonitriden aufweist, die sich durch unterschiedliche Zusammensetzungen an C und N unterscheiden.

4. Verschleissteil nach Anspruch 1 oder Anspruch 2, dadurch gekennzeichnet, dass der Überzug mehrere übereinanderliegende Schichten von Boronitriden aufweist, die sich durch unterschiedliche Zusammensetzungen an B und N unterscheiden.

# 0 006 534

5. Verschleissteil nach Anspruch 1 oder Anspruch 2, dadurch gekennzeichnet, dass der Überzug mehrere Male die gleiche Gruppe von Schichten verschiedener Zusammensetzungen aufweist.

6. Verschleissteil nach Anspruch 1, dadurch gekennzeichnet, dass die gesamte Dicke des Überzugs zwischen 1 und 20 $\mu$m liegt.

7. Verschleissteil nach Anspruch 1, dadurch gekennzeichnet, dass die Karbid- und Nitridschichten unter den Karbiden und Nitriden von Hf, Zr, Ti und Ta gewählt sind.

8. Verschleissteil nach Anspruch 1, dadurch gekennzeichnet, dass die Boridschichten unter den Boriden von Hf, Zr, Ti, N und Ta gewählt sind.

9. Verschleissteil nach Anspruch 1, dadurch gekennzeichnet, dass die Oxidschichten unter den Oxiden von Hf, Zr, Ti, Al und Be gewählt sind.

## Claims

1. Hard metal wearing piece, especially for cutting tools, which is covered at least on the places subjected to wear with a stratified protecting coating, in which the layer in contact with the surface of the piece consists in a carbide layer, and in which layers of the same composition are repeated, characterized by the fact that this coating comprises more than five superimposed layers, each having a determined composition which is constant in its depth, that the external layer consists in a boride layer, and that the intermediary layers are chosen among layers of carbide, nitride, oxide, boride and of mixed compounds thereof.

2. Wearing piece according to claim 1, characterized by the fact that the coating comprises at least ten superimposed layers.

3. Wearing piece according to claim 1 or claim 2, characterized by the fact that the coating comprises several superimposed layers of carbonitrides differing from each other by different C and N contents.

4. Wearing piece according to claim 1 or claim 2, characterized by the fact that the coating comprises several superimposed layers of boronitrides differing from each other by different B and N contents.

5. Wearing piece according to claim 1 or claim 2, characterized by the fact that the coating comprises several times the same group of layers of different compositions.

6. Wearing piece according to claim 1, characterized by the fact that the total thickness of said coating is comprised between 1 and 20 $\mu$.

7. Wearing piece according to claim 1, characterized by the fact that the carbide and nitride layers are chosen among the carbides and nitrides of Hf, Zr, Ti and Ta.

8. Wearing piece according to claim 1, characterized by the fact that the boride layers are chosen among the borides of Hf, Zr, Ti, Ta and N.

9. Wearing piece according to claim 1, characterized by the fact that the oxide layers are chosen among the oxides of Hf, Zr, Ti, Be and Al.